# EUROPÄISCHE PATENTSCHRIFT

(11) **EP 3 169 640 B1**
(45) Veröffentlichungstag und Bekanntmachung des Hinweises auf die Patenterteilung: **27.11.2019**
(21) Anmeldenummer: 15777621.2
(22) Anmeldetag: 18.09.2015
(51) Int. Cl.: C04B 26/14, C04B 28/00

(54) **HERSTELLEN EINES SCHLICKERS UND BAUTEIL AUS DEM SCHLICKER**
PRODUCTION OF A SLIP AND COMPONENT COMPOSED OF THE SLIP
PRODUCTION D'UNE BARBOTINE ET PIÈCE FABRIQUÉE À PARTIR DE CETTE BARBOTINE

(30) Priorität: 26.09.2014 DE 102014219543
(43) Veröffentlichungstag der Anmeldung: 24.05.2017
(73) Patentinhaber: Siemens Aktiengesellschaft, 80333 München (DE)
(72) Erfinder: BÖDINGER, Hermann, 81243 München (DE); DENNELER, Stefan, 81371 München (DE); SCHUH, Carsten, 85598 Baldham (DE); ÜBLER, Matthias, 92289 Ursensollen (DE)
(86) Internationale Anmeldenummer: PCT/EP2015/071476
(87) Internationale Veröffentlichungsnummer: WO 2016/046086

(56) Entgegenhaltungen:
- EP-A2- 0 517 129
- EP-A2- 1 852 405

## Beschreibung

Die Erfindung betrifft ein Verfahren zum Herstellen eines Schlickers, wobei mindestens ein anorganischer Bestandteil mit mindestens einem ersten Binder vermischt wird und der erste Binder eine Mischung aus mindestens einem Epoxidharz und mindestens einem Härtungsmittel für das mindestens eine Epoxidharz aufweist. Die Erfindung betrifft auch ein Bauteil, das mittels eines solchen Schlickers hergestellt worden ist. Die Erfindung ist insbesondere anwendbar zur kostengünstigeren Herstellung von komplexen Metallschaufeln in Gas- und Antriebsturbinen aller Art.

Keramische Gießkerne dienen im Metallfeingussverfahren als verlorene Negativformen dem Aufbau komplex gearteter Positivgeometrien, insbesondere bei der Darstellung mikroskaligdimensionierter Oberflächenstrukturierungen, die durch herkömmliches Fräsen oder spanende Bearbeitungsformen aufgrund von Hinterschneidungen, Hohlräumen oder werkzeugbedingten Auflösungsgrenzen nicht hergestellt werden können. Insbesondere findet das Verfahren Anwendung zur kostengünstigeren Herstellung von komplexen Metallschaufeln in Gas- und Antriebsturbinen. Dabei bedient man sich zur Darstellung von verlorenen Gießkernen der Schlickermethode, bei der ein bei hohen Temperaturen versinterbares Pulverkonglomerat aus verschiedenartigen, anorganischen Bestandteilen mit zweierlei aufeinander aufbauenden Bindertypen in einem Lösemittel dispergiert wird.

Dieser Schlicker wird in eine Gießform zum anschließenden Härten gegossen. Die Gießform trägt dabei die gewünschte Gestalt- und Oberflächenstrukturierung, die der keramische Gießkern im späteren Zustand annehmen soll.

Durch Applikation von Vakuum und Vibration wird das Lösungsmittel, welches primär der Viskositätserniedrigung dient, abgezogen und dabei gleichzeitig die Füllstoffpulverfraktion absedimentiert und gemäß der maximalen Packungsdichte der Pulverkorngrößenverteilung kompaktiert.

Durch Warm- bzw. Heißhärten bei bis zu 160°C polymerisiert der erste Binder oder Binderbestandteil und gibt dem resultierenden Grünling die später zu sinterfixierende Geometrie.

Dieser Grünling wird folgend von der Gießform befreit und sodann in einem stufenweisen Temperaturprofil zur Keramik gesintert, wobei bis 300°C der erste Binderbestandteil pyrolysiert und größtenteils in Form von gasförmigen Oxidationsprodukten ausgetrieben wird. Damit der entbinderte Grünling vor dem finalen Sintern bei hohen Temperaturen als ein sog. "Braunling" in der Form und Gestalt konserviert wird, dient für gewöhnlich ein zweiter, hochtemperaturfester Binder oder Binderbestandteil, der die Form nach der Entbinderung gewährleistet. Dieser Bestandteil verfestigt ab ca. 250 °C bis ca. 500°C unter Abgabe volatiler Bestandteile. In einem letzten Temperaturschritt wird die Keramik durch Hochtemperatursinterung des Braunlings produziert, die später dem Metallfeinabguss dient.

US 2011018944 A1 offenbart, dass ein Bindergesamtsystem eine Kombination aus anhydridisch-heißhärtendem, cycloaliphatischen Epoxidharz und reaktivem Festsilikon auf Methylpolysiloxanbasis darstellt. Unter Zugabe von Dispersionsadditiven, Plastifizierern (Kautschuk) und Lösemitteln (Methylethylketon, Isopropylalkohol oder Hexan) lässt sich eine Schlickerformulierung mit einem hohen Anteil an Sinterkeramikpulver bereiten, die zum Guss von verlorenen Keramikgrünkernen tauglich ist. Das Sinterkeramikpulver ist eine multimodale, packungsdichteoptimierte Mischung aus amorphem Quarzgut, Christobalit, Magnesiumoxid, Aluminiumoxid, Yttriumoxid und Zirkonoxid.

Cycloaliphatische Epoxidharze zeichnen sich durch besonders niedrige, dynamische Viskositäten aus, die geringere nötige Lösemittelgehalte ermöglichen. Die Härterkomponente der Epoxidharze ist für gewöhnlich ein Säureanhydrid, z.B. des Typs Methylhexahydrophthalsäure, Methyltetrahydrophthalsäure oder Methylnadinsäure. Diese Gemische stellen Hochtemperatursysteme dar, die eines Beschleunigers zur Initiierung der Polymerisation bedürfen und Aushärtetemperaturen höher 130°C über mehrere Stunden fordern. Der Reaktionsschwund in der US 2011018944 A1 liegt im Bereich von bis zu 5 Vol.-%.

Als zweiter Binder für die Ausbildung des Braunlingszustands wird in der US 2011018944 A1 reaktives Festsilikon in Form eines polykondensationsvernetzenden Alkoxyorganopolysiloxan verwendet, welches unter Temperaturbelastung zu amorphem Quarz pyrolysiert. Die Zumischung des Festsilikons erfolgt dabei als lose Pulverzusatzfraktion zum Sinterkeramikpulver.

Die EP 1 852 405 A2 offenbart ein Verfahren zur Herstellung eines Keramikbindemittels umfassend den Schritt des Vermischens eines anorganischen Bestandteils mit einer reaktiven organomodifizierten Silikonverbindung.

Die EP 0 517 129 A2 offenbart ein Verfahren zur Herstellung eines Schlickers umfassend den Schritt des Vermischens eines anorganischen Bestandteils mit einem Epoxidharzbinder und einem aliphatischen Polyamin.

Problematisch für eine weitere Erniedrigung der Härtungstemperaturen ist, dass dann mit bisherigen Formulierungen eine vollständige Polymerisation des beigemengten Silikonpulvers nicht gewährleistet werden kann. Eine Vulkanisation des Silikonpulvers unterhalb 100°C zu einem steifen Silikonbindersystem zur Fixierung des Sinterkeramikpulvers ist aufgrund des zugrundeliegenden chemischen Mechanismus (Ethoxygruppenhydrolyse unter anschließender Kondensation zu einem Silikonhochpolymer) nur unzureichend zu bewerkstelligen, da die Hydrolyse Beschleunigersubstanzen und/oder erhöhte Temperaturen benötigt. Dies äußert sich in einer verminderten Steifigkeit bzw. einem geringen Elastizitätsmodul des Grünlings, was jedoch z.B. für Multiwall- bzw. Mehrwand-Keramikgießkerne nachteilig ist.

Es ist die Aufgabe der vorliegenden Erfindung, einen insbesondere keramikpulverbasierten Schlicker bereitzustellen, welcher sich bei besonders geringen Härtungstemperaturen auch als Braunling sicher mechanisch stabilisieren lässt. Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Herstellen eines Schlickers, wobei mindestens ein anorganischer Bestandteil mit mindestens einem Binder vermischt wird und der Binder mindestens ein Epoxidharz und mindestens einem Silikoncopolymerisat aufweist.

Dieser Schlicker weist den Vorteil auf, dass er aufgrund des so ausgestalteten Binders eine vollständige Inkorporation der Braunlings-Silikonkomponente gewährleistet. Zu seiner Verfestigung benötigt er nur sehr geringe (Verfestigungs-) Temperaturen und weist dennoch einen zur Herstellung eines Körpers mittels des Schlickers ausreichend langen Verarbeitungszeitraum auf. Beispielsweise sind Verarbeitungszeiträume des Schlickers von mehreren Stunden erreichbar. Der Binder benötigt keine Beschleunigersubstanzen zur Härtungsinitiierung. Zudem lässt sich mittels dieses ersten Binders eine vollständige Aushärtung bei dieser niedrigen Temperatur erreichen, so dass sich für eine Weiterverarbeitungs-Prozesskette geeignete Biege- bzw. Bruchfestigkeiten bereitstellen lassen. Mit diesen Silikontypen dargestellte Schlicker bedürfen keiner weiteren Zumischung von pulverförmigem Silikon, da eine optimale Dispersion durch den chemischen Einbau bei der Härtungsreaktion stattfindet. Es kommt vorteilhafterweise zudem zu keiner Entmischung beim Aushärten. Ferner lässt sich der Binder mit einer geringen Viskosität bereitstellen, was eine Ausformung des Schlickers in einer Gießform erleichtert. Darüber hinaus ist dieser Binder mit gängigen Lösemitteln ohne Zersetzung mischbar, und zwar in jedem Verhältnis. Der Binder härtet den Schlicker additionsvernetzend nahezu reaktionsschwundfrei in einen stabilen Formkörper.

Insbesondere lassen sich Verfestigungstemperaturen von nicht mehr als 70°C, insbesondere von nicht mehr als 60°C, insbesondere von nicht mehr als 50°C, insbesondere von nicht mehr als 45°C, insbesondere von nicht mehr als 40°C, insbesondere von nicht mehr als 35°C, insbesondere weniger als 35°C, erreichen. Dies ermöglicht die Verwendung von abwechselnd aufgebrachten Wachstemplaten für zu realisierende Vielwandgeometrien und/oder von Wachsgussformen. Die Eigenschaft der Niedrigtemperaturverfestigung, insbesondere Härtung, erlaubt insbesondere den Aufbau von Vielwandgießkernen durch Verwendung von alternierend aufgebrachten Templatwachs- und Schlickerschichten. Dieses Verfahren kann nur verwendet werden, wenn der Binder unterhalb des Wachsschmelzpunktes zum Formkörper polymerisiert. Der Schmelzpunkt gewöhnlicher Wachse beträgt typischerweise 50°C bis 70°C. Derzeit verwendete Binder benötigen dagegen Verfestigungstemperaturen jenseits des Wachsschmelzpunktes zur vollständigen Aushärtung, so dass ein Multischichtdesign mit diesen herkömmlichen Bindern nicht möglich ist.

Jedoch lässt sich der Schlicker auch in beliebige Gussformen eingießen, z.B. in Silikonformen usw. Die niedrige Aushärtungstemperatur ermöglicht dann insbesondere eine Energieersparnis, eine besonders einfache Herstellung und vermeidet eine Erweichung oder sogar Schädigung der Gussform.

Das mindestens eine Epoxidharz mag ein Epoxidharz oder eine Mischung aus mehreren Epoxidharzen sein. Allgemein mag unter einem Epoxidharz auch ein zugrundeliegendes Monomer oder Oligomer verstanden werden. So mag beispielsweise unter "Bisphenol-A-Diglycidylether" oder "Bisphenol-A-Diglycidyletherharz" sowohl das Epoxidharz als auch das zugrundeliegende Monomer und/oder Oligomer verstanden werden.

Der Binder kann insbesondere als eine Bindermatrix vorliegen, die den mindestens einen anorganischen Bestandteil (z.B. Pulver) als Füllstoff enthält.

Das Silikoncopolymerisat ist insbesondere ein kurzkettiges Silikoncopolymerisat. Das Silikoncopolymerisat mag insbesondere als Härtungsmittel wirken.

Es ist eine Ausgestaltung, dass als Silikoncopolymerisat mindestens ein glycidylfunktionales Poly(Phenyl-Methyl)-Silikon verwendet wird. Ein solcher Stoff bzw. diese Verbindungsklasse hat sich zur Erreichung der obigen Vorteile als besonders vorteilhaft herausgestellt. Er kann besonders vorteilhaft beliebig mit Epoxidharzen bzw. den zugehörigen Monomeren und/oder Oligomeren verstreckt werden. Er mag auch mit Aminen, die weiter unten genauer beschrieben sind, verstreckt werden. Dieser Stoff wirkt insbesondere als ein kofunktionaler Hybridstoff oder Hybridpolymer, der sowohl wie ein Monomer oder Oligomer zur Herstellung von Epoxidharz(en) wirkt als auch wie ein Härter für Epoxidharz. Das glycidylfunktionale Poly(Phenyl-Methyl)-Silikon ist insbesondere ein partiell hinsichtlich der Epoxidharzhärtungsreaktion mit reaktiven Gruppen abgesättigtes Kopolymerisat. Kommerziell erhältliche Vertreter sind z.B. HP-1250 (Wacker Silikone) und Tego Albiflex 348 (Evonik Industries).

Es ist eine zusätzliche oder alternative Ausgestaltung, dass als Silikoncopolymerisat mindestens ein aminofunktionales Poly(Phenyl-Methyl)-Silikon verwendet wird. Das aminofunktionale Poly(Phenyl-Methyl)-Silikon ergibt die gleichen Vorteile wie das glycidylfunktionales Poly(Phenyl-Methyl)-Silikon, wirkt aber stärker als aminisches Härtungsmittel. Auch dieser Stoff mag insbesondere ein partiell hinsichtlich der Epoxidharzhärtungsreaktion mit reaktiven Gruppen abgesättigtes Kopolymerisat sein. Kommerziell erhältliche Vertreter der aminofunktionalen Silikontypen sind etwa die Derivate HP-2000 und HP-2020 der Fa. Wacker Silikone.

Es hat sich als eine zur Erreichung harter und steifer Grünlinge bei geringen Aushärtungstemperaturen von ca. 35°C und geeigneten Topfzeiten vorteilhafte Weiterbildung erwiesen, dass der Binder eine Abmischung von aminofunktionalem Poly(Phenyl-Methyl)-Silikon mit Epoxidharz aufweist.

Insbesondere mag dazu das mindestens eine Silikoncopolymerisat mit Bisphenol-A-Diglycidylether und/oder Bisphenol-F-Diglycidylether abgemischt werden, insbesondere in einer 10%-igen bis 50%-igen (w/w) Abmischung. So wird vorteilhafterweise ein hoher Glasübergangsbereich nach Aushärtung bei 35°C erlangt.

Allgemein mögen mindestens ein Epoxidharz und mindestens eine Silikoncopolymerisat abgemischt werden bzw. als Mischung vorliegen.

Zusätzlich oder alternativ können allgemein mindestens ein Epoxidharz und mindestens ein Silikoncopolymerisat als Hybrid bzw. als Hybridpolymer vorliegen. Dies mag eine Handhabung vereinfachen. Ein solches Silikoncopolymerisat mag also mit mindestens einem Epoxidharz und/oder mit mindestens einem weiteren Silikoncopolymerisat gemischt werden.

Es ist ferner eine Ausgestaltung, dass der Binder mindestens ein Amin als zusätzliches Härtungsmittel aufweist.

Es ist eine Ausgestaltung davon, dass das zusätzliche Härtungsmittel mindestens ein in beta-Stellung sterisch gehindertes Amin aufweist. Dieses unterstützt das Erreichen der obigen Vorteile mit herstellungstechnisch einfachen und günstigen Mitteln. Nicht-sterisch gehinderte Amine haben dagegen in Kombination mit Epoxidharzen bei Raumtemperatur eine Topfzeit von nur wenigen Minuten, was ihre Verwendung als sog. 2K-Sekundenkleber begründet. Da zur Verarbeitung von Schlickerformulierungen jedoch für das Befüllen, Entgasen und Vibrieren der gefüllten Gussform ca. eine Stunde benötigt wird, ist diese ungehinderte Harzspezies per se für den genannten Zweck untauglich. Im Gegensatz dazu zeigen in beta-Stellung organosubstituierten Amine eine deutlich verlängerte Gelzeit bei Reaktion mit 1,2-Oxiraneinheiten, wie z.B. Bisphenol-A-Diglycidyletherharzen (im Folgenden auch als "BADGE" bezeichnet) oder Bisphenol-F-Diglycidyletherharzen (im Folgenden auch als "BFDGE" bezeichnet).

Es ist auch eine Ausgestaltung, dass als mindestens ein sterisch gehindertes Amin mindestens ein in beta-Stellung organosubstituiertes Amin verwendet wird. Solche Amine unterstützen die obigen Vorteile mit einem geringen herstellungstechnischen Aufwand und sind preiswert beziehbar. Durch eine sterische Hinderung mittels organischer Gruppen wie Methyl, Ethyl, Propyl und/oder höher in beta-Stellung zum terminalen Amin lässt sich eine Reaktivität der endständigen Aminogruppe in Bezug insbesondere zu 1,2-Epoxidreaktanden deutlich reduzieren und damit der Verarbeitungszeitraum verlängern.

Es ist eine Weiterbildung, dass das mindestens eine sterisch gehinderte Amin mindestens ein sterisch gehindertes Diamin aufweist oder ist. Denn es hat sich gezeigt, dass eine Verwendung von Diaminen unter anderem besonders vorteilhafte Werte einer dynamischen Viskosität ergibt. Ein durch eine Methylgruppe sterisch gehindertes Diamin ist beispielsweise unter dem Handelsnamen "Jeffamine D-230" von der Firma "Huntsman Corporation" bekannt.

Da kurze Amine (einschließlich kurzer Diamine) in Kombination mit 1,2-Epoxidharzen zu relativ spröden Formstoffen aufgrund der ausgebildeten hohen Netzwerkdichte führen, ist eine gewisse Flexibilität im hochpolymeren Netzwerk von Vorteil, um eine Rissinitiierung und einen Rissfortschritt zu unterbinden. Polyethylenglykole mit Repetiereinheiten im Bereich von 3 bis 20 können zu diesem Zwecke in Epoxidharzen als Additive verwendet werden. Besonders vorteilhaft ist es, wenn derartig flexible Segmente als Abstandshalter in sterisch-gehindertem Diamin zugegen sind, da Polyglykole mit terminalen Hydroxygruppen katalytisch auf die Polymerisationsinitiierung wirken. Es ist daher eine zur Ausbildung des zusätzlichen Härtungsmittels vorteilhafte Weiterbildung, dass dem Härtungsmittel oder dem ersten Binder zusätzlich Polyethylenglykol mit Repetiereinheiten zwischen 3 und 20 beigemischt ist, insbesondere mit Repetiereinheiten zwischen 3 und 20.

Zur Ausbildung des zusätzlichen Härtungsmittels besonders vorteilhafte Strukturen des verwendeten zusätzlichen Härtungsmittels, insbesondere Härtermoleküls, umfassen demnach Polyethermethyldiamine. Es ist folglich eine vorteilhafte Ausgestaltung, dass das Härtungsmittel oder der erste Binder Polyethermethyldiamin(e) (im Folgenden auch als "PEMDA" bezeichnet) aufweist.

Es hat sich zur Ausbildung des zusätzlichen Härtungsmittels als besonders vorteilhaft herausgestellt, dass das zusätzliche Härtungsmittel Polyethermethyldiamin(e) des Typs

H₂N-CH(-CH₃)-CH₂-[O-CH₂-CH(-CH₃)]ₓ-NH₂ (I)

mit x einer Repetiereinheit von 0 bis 40, insbesondere von 2 bis 35, insbesondere von 2 bis 34, aufweist. Die dynamischen Viskositäten der Verbindung(en) (I) mit einer Repetiereinheitenzahl x von 2 bis 3 beträgt ca. 10 mPas bei 25°C und ist damit ca. zehnmal niedriger als die dynamische Viskosität des oftmals in heißhärtenden Systemen verwendeten, dünnflüssigen Methyltetrahydrophthalsäureanhydrids.

Da cycloaliphatische Epoxidharze mit sehr niedrigen Viskositäten oftmals dem Typ 3,4-Epoxycyclohexyl-methyl-3',4'-epoxycyclohexancarboxylat ("Cycloaliphat") entsprechen, mag insbesondere eine Härtung mit dem zusätzlichen Härtungsmittel (I) durchgeführt werden, woraus eine äußerst dünnflüssige Bindermatrix resultiert. Die Reaktivität der gehinderten Polyethermethyldiamine ist gegenüber dem 3,4-Epoxycyclohexylmethyl-3',4'-epoxycyclohexancarboxylat jedoch so gering, dass selbst unter hochprozentiger Beschleunigerzugabe und erhöhten Temperaturen keine Gelierung und/oder Reaktion eintritt. Gleichzeitig zeigen Bisphenol-A-Diglycidyletherharze (BADGE) oder Bisphenol-F-Diglycidyletherharze (BFDGE) jedoch dynamische Viskositäten im Bereich 4000-12000 mPas bei Raumtemperatur, sodass derartige Mischungen nachteiligerweise relativ zäh sind. Zwar sind destillierte Bisphenol-F-Diglycidyletherharze mit dynamischen Viskositäten im Bereich von 1200 bis 1400 mPas bei Raumtemperatur kommerziell erhältlich, jedoch sind sie teuer und neigen zu rascher Kristallisation, sodass ein Vorwärmen oder gar ständiges Warmhalten zur Formulierung nötig ist, was zu verkürzten Topfzeiten führen kann.

Als Epoxidharz(e) können allgemein beispielsweise Epoxidharz(e) auf der Basis von BADGE, BFDGE und/oder cycloaliphatische Epoxidharze mit endständigen 1,2-Oxiraneinheiten (einschließlich beliebiger Mischungen davon) verwendet werden, die z.B. von der Firma Huntsman unter den Handelsnamen "Araldite PY 306", "CY 184" oder "CY 192" oder von der Firme Momentive unter den Handelsnamen "EPR158" oder "EPR162" erhältlich sind.

Es ist eine vorteilhafte Ausgestaltung, dass als das mindestens eine Epoxidharz mindestens eine Bisphenol-A-/Bisphenol-F-Diglycidylether-Abmischung ("BADGE/BFDGE") verwendet wird bzw. das mindestens eine Epoxidharz mindestens eine BADGE/BFDGE-Abmischung aufweist, da eine solche Abmischung keine Kristallisationsneigung zeigt.

Es ist eine weitere vorteilhafte Ausgestaltung, dass dem Binder mindestens ein Reaktivverdünner (im Folgenden auch als "RV" bezeichnet), insbesondere mindestens ein epoxidischer Reaktivverdünner, beigemischt wird oder beigefügt ist. Der mindestens eine Reaktivverdünner bewirkt eine verbesserte dynamische Viskosität des ersten Binders. Entsprechend vorformulierte Produkte sind beispielsweise von der Huntsman Corporation unter den Handelsnamen "Araldite LY 1564", "Araldite LY 1568", "Araldite GY 793" oder "Araldite GY 794" erhältlich.

Es ist eine Weiterbildung, dass der epoxidische Reaktivverdünner ein monofunktionaler, bifunktionaler und/oder noch höherfunktionaler epoxidischer Reaktivverdünner ist. Als Reaktivverdünner können z.B. 1,4-Butandioldiglycidylether, 1,6-Hexandioldiglycidylether, Neopentyldiglycidylether, Cresylglycid o.ä. verwendet werden.

Es ist eine zusätzliche oder alternative Ausgestaltung, dass dem Binder Propylencarbonat, Butylencarbonat, Glycerincarbonat oder mindestens eine beliebige Mischung daraus beigemischt wird bzw. der Binder Propylencarbonat, Butylencarbonat, Glycerincarbonat oder mindestens eine beliebige Mischung daraus aufweist.

Die neuartigen Zusammensetzungen mit Silikoncopolymerisat als Härtungsmittel sind in den Lösemitteln Methylethylketon, Aceton und Isopropylalkohol ohne Zersetzung lösbar. Es ist daher eine weitere vorteilhafte Weiterbildung, dass der Schlicker Methylethylketon, Aceton und/oder Isopropanol als Lösungsmittel aufweist bzw. dem Schlicker beigemischt wird.

Der mindestens eine anorganische Bestandteil mag mindestens ein Pulver aufweisen bzw. ein anorganischer Pulverbestandteil sein. Der mindestens eine anorganische Bestandteil mag mindestens ein keramisches Pulver aufweisen, insbesondere sinterfähiges keramisches Pulver, z.B. Magnesiumoxid, Aluminiumoxid, Yttriumoxid und/oder Zirkonoxid. Zusätzlich zu dem mindestens einen keramischen Pulver mag der anorganische Bestandteil mindestens ein anorganisches nichtkeramisches Pulver aufweisen, z.B. amorphes Quarzgut und/oder Christobalit. Aus einem zumindest teilweise keramischen Pulver lässt sich ein Grünling oder Grünkörper formen. Das mindestens eine Pulver mag in dem ersten Binder dispergiert sein.

Da eine Dichte des Grünlings wesentlich durch eine maximale Packungsdichte des - insbesondere dispergierten - Keramikpulvers bestimmt ist, ist ein maximaler theoretischer Packungskoeffizient vorteilhafterweise möglichst hoch. Durch Einstellung von Multimodalitäten innerhalb der Füllstofffraktion ist die Möglichkeit bekannt, die Packungsdichte zu erhöhen. So packt ein um einen definierten Partikeldurchmesser gaußverteiltes, monodisperses Pulver etwa zu 64 Vol.-%. Durch ("bimodale") Beimengung mindestens einer weiteren Pulverfraktion, die in ihrem Partikeldurchmesser derart gewählt ist, dass die Zwischenräume oder "Zwickel" der gröberen Pulverpartikel durch die kleineren Pulverpartikel teilweise ausgefüllt sind, resultieren Packungsdichten bis zu 80 Vol.-%. Eine trimodale Pulvermischung erlaubt noch höhere Packungsdichten von bis zu 90 Vol.-%. Multimodale Füllstofffraktionen finden oftmals Anwendung als Sinterpulver, da so genügend Kontakte zwischen benachbarten Pulverpartikeln erzeugt werden, die zu einer besonders porenarmen Sinterkeramik führen. Es ist daher eine vorteilhafte Ausgestaltung, dass der mindestens eine anorganische Bestandteil unterschiedliche Fraktionen, insbesondere Pulverfraktionen, insbesondere Keramikpulverfraktionen, mit zueinander multimodalen (bimodalen, trimodalen usw.) Partikelgrößenverteilungen aufweist.

Eine Erhöhung des maximalen Packungskoeffizienten des Schlickers bzw. eines daraus hergestellten Körpers (insbesondere eines Grünlings, eines Braunlings oder eines durchgesinterten Körpers) lässt sich vorteilhafterweise durch Inkorporation oder Einbringung anorganischer Nanopartikel zu dem Schlicker oder als ein Bestandteil des Schlickers erhöhen. Die anorganischen Nanopartikel können sich in die Zwischenräume oder Zwickel auch multimodaler Pulvermischungen einbringen. Da anorganische Nanopartikel oftmals als Pulver vorliegen, die zu Agglomeration und Aggregation neigen und mechanisch nur schwer zu trennen sind, ist eine Eindispergierung in den ersten Binder auf diese Weise nur schwer möglich und führt zu starken Viskositätsanstiegen. Abhilfe schafft vorteilhafterweise die Verwendung z.B. von kolloidal-dispersen, anorganischen, amorphen Siliziumdioxid-Nanopartikeln in Lösemitteln. Es ist also ferner eine vorteilhafte Ausgestaltung, dass der Schlicker, insbesondere dessen mindestens ein anorganischer Bestandteil, kollodialdisperse, amorphe Siliziumdioxid-Nanopartikel aufweist, insbesondere als eine Kolloidlösung.

Besonders vorteilhaft und stabil gegen Agglomeration ist eine derartige Kolloidlösung, wenn die Oberfläche der Siliziumoxidpartikel mit einem epoxidverträglichem Haftvermittler kovalent überzogen oder "gecoated" ist. Auf diese Weise erfolgt auch nach Abzug des Lösemittels keine Koagulation bzw. Aggregation der nanoskaligen Füllstoffpartikel.

Es ist eine Weiterbildung, dass der Schlicker mindestens einen weiteren, hochtemperaturfesten Binder aufweist. Dadurch lassen sich besonders stabile Braunlinge herstellen. Der hochtemperaturfeste weitere Binder mag insbesondere sinterbares Silikon aufweisen oder sein, insbesondere kondensationsvernetzendes Festsilikon. Das sinterbare Silikon mag in dem Schlicker insbesondere als Pulver vorliegen, insbesondere als ein nanoskaliges Pulver. Das sinterbare Silikon weist unter anderem den Vorteil auf, dass es sich gut in Methylethylketon, Aceton und/oder Isopropylalkohol löst, so dass sich verhältnismäßig geringe Lösemittelgehalte zur Einstellung optimaler Fließfähigkeiten unter Lösung aller Binderbestandteile umsetzen lassen. Auch dies ist ein Vorteil der Verwendung der Lösungsmittel Methylethylketon, Aceton und/oder Isopropylalkohol.

Beispielsweise können folgende Zusammensetzungen einen Schlicker bilden:

**Tab.1:**

| Material | Hersteller | Gehalt [g] | Gew.-%, lösemittelfrei | Bemerkung |
|---|---|---|---|---|
| Araldite LY 1564 | Huntsman | 5,79 | 8,0 | BADGE/BFDGE/RV-System |
| Aradur 3486 | Huntsman | 0,21 | 0,3 | vor beschleunigtes Jeffamin D-230 |
| HP-2000 | Wacker | 7, 34 | 9,1 | Amino-MethylPhenyl-Silikon in 10% Toluol |
| Isopropylalkohol | Baker | 5,50 | - | temporäres Lösemittel; abzuziehen |
| Sinterpulver | n/a | 60,0 | 82,6 | trimodales, amorphes Sinterpulver |

Die in Tab.1 gezeigte Zusammensetzung weist also zusätzlich zu dem Amino-MethylPhenyl-Silikon als Silikoncopolymerisat eine geringe Beimengung von aminischem Härtungsmittel in Form von Jeffamin D-230 auf. Dieses aminosilikonmodifizierte Bindersystem ergibt eine Grünlingsdichte von 1,944 g/cm³ nach 24h bei 35°C.

**Tab.2:**

| Material | Hersteller | Gehalt [g] | Gew.-%, lösemittelfrei | Bemerkung |
|---|---|---|---|---|
| Araldite LY 1564 | Huntsman | 5,14 | 7,1 | BADGE/BFDGE/RV-System |
| HP-2020 | Wacker | 7,46 | 10,3 | lösemittelfreies Amino-MethylPhenyl-Silikon |
| Isopropylalkohol | Baker | 6,50 | - | temporäres Lösemittel; abzuziehen |
| Sinterpulver | n/a | 60,0 | 82,6 | trimodales, amorphes Sinterpulver |

Das in Tab.2 beschriebene aminosilikonmodifizierte Bindersystem unterscheidet sich von der in Tab.1 gezeigten Zusammensetzung unter anderem dadurch, dass kein Jeffamin D-230 mehr verwendet wird.

**Tab.3:**

| Material | Hersteller | Gehalt [g] | Gew.-%, lösemittelfrei | Bemerkung |
|---|---|---|---|---|
| HP-1250 | Wacker | 11,63 | 16,1 | Lösemittelfreies Glycidoxy-MethylPhenyl-Silikon |
| Aradur 3486 | Huntsman | 0, 97 | 1,3 | vor beschleunigtes Jeffamin D-230 |
| HP-2000 | Wacker | 7,34 | 9,1 | Amino-MethylPhenyl-Silikon in 10% Toluol |
| Isopropylalkohol | Merck | 6,50 | - | temporäres Lösemittel; abzuziehen |
| Sinterpulver | n/a | 60,0 | 82,6 | trimodales, amorphes Sinterpulver |

Das in Tab.3 beschriebene glycidoxysilikonmodifizierte Bindersystem unterscheidet sich von der in Tab.1 gezeigten Zusammensetzung unter anderem dadurch, dass anstelle von Amino-MethylPhenyl-Silikon nun Glycidoxy-MethylPhenyl-Silikon verwendet wird. Dadurch kann auf das BADGE/BFDGE/RV-System verzichtet werden, da das Glycidoxy-MethylPhenyl-Silikon epoxyfunktional ist, d.h., dass es auch die Eigenschaft eines Epoxidharzes bzw. seiner Monomere und/oder Oligomere aufweist. Das Glycidoxy-MethylPhenyl-Silikon weist zusätzlich die bindende und ggf. härtende Eigenschaft des Silikoncopolymerisats auf. Zur Unterstützung der Härtung ist hier Jeffamin D-230 beigemengt.

Die Aufgabe wird auch gelöst durch einen Schlicker, der mittels des Verfahren wie oben beschrieben hergestellt worden ist.

Die Aufgabe wird auch gelöst durch ein Bauteil, das mittels eines Schlickers hergestellt worden ist, welcher Schlicker mittels des Verfahren wie oben beschrieben hergestellt worden ist.

Das Bauteil mag insbesondere eine Gussform, insbesondere ein Gießkern, für ein metallisches Gussbauteil sein, z.B. für eine Metallschaufel in Gas- und Antriebsturbinen. Der Gießkern mag insbesondere ein Vielwandgießkern sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit einer Zeichnung näher erläutert wird. Dabei können zur Übersichtlichkeit gleiche oder gleichwirkende Elemente mit gleichen Bezugszeichen versehen sein.

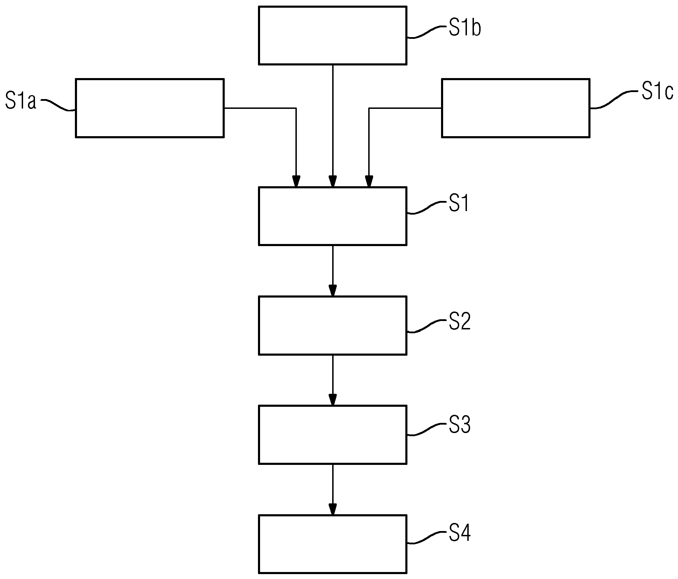

Die einzige Figur zeigt einen möglichen Ablauf zum Herstellen eines keramischen Gießkerns auf der Grundlage des Verfahrens zum Herstellen eines Schlickers gemäß Tab.2.

Dazu wird in einem ersten Schritt S1 ein keramikpulverbasierter Schlicker gemäß Tab.2 hergestellt.

Und zwar wird dazu in einem ersten Teilschritt S1a eine trimodal größenverteilte, amorphe Pulvermischung auf einem oder mehreren Keramikpulvern bereitgestellt, z.B. umfassend Magnesiumoxid, Aluminiumoxid, Yttriumoxid und Zirkonoxid, und zwar mit einem Anteil von 82,6 Gew.-% (lösemittelfrei).

Ferner wird in einem zweiten Teilschritt S1b eine erste Binderkomponente (Epoxy-Basismischung) eines Binders bereitgestellt, und zwar durch eine Abmischung aus BADGE und BFDGE mit einem mono- oder bifunktionalen epoxidischen Reaktivverdünner RV. Eine solche Mischung ist kommerziell als "Araldite LY 1564" von der Firma Huntsman erhältlich. Sie wird hier mit einem Anteil von 7,1 Gew.-% (lösemittelfrei) bereitgestellt. In einem dritten Teilschritt S1c wird Silikoncopolymerisat als eine zweite Binderkomponente (Härtungsmittel) des Binders bereitgestellt, und zwar in Form von lösemittelfreiem Amino-MethylPhenyl-Silikon mit einem Anteil von 10,3 Gew.-%.

Durch Zusammenführen der in den Teilschritten S1a, S1b und S1c bereitgestellten Ausgangsstoffe unter Zugabe von Isopropylalkohol als Lösungsmittel wird der Schlicker in Schritt S1 erzeugt. Das Zusammenführen mag insbesondere ein Dispergieren umfassen. Das Zusammenführen bewirkt einen Härtungsablauf des Binders und damit auch eine Verfestigung des Schlickers.

Die in den Teilschritten S1a, S1b und S1c bereitgestellten Ausgangsstoffe können grundsätzlich in beliebiger Reihenfolge zusammengeführt werden.

In einem folgenden Formungsschritt S2 wird der Schlicker in seinem noch viskosen Zustand geformt oder verarbeitet, insbesondere schichtweise alternierend mit Templatwachsschichten zu einem Grünkörper verarbeitet.

In einem anschließenden Härtungsschritt S3 härtet der Binder unter Beibehaltung der Templatwachsschichten bei einer Temperatur von nicht mehr als 35 °C aus. Am Ende des Härtungsschritts S3 ist der Binder vollständig ausgehärtet, und der geformte Schlicker bildet einen Grünkörper mit seiner später zu sinterfixierenden Geometrie. Der Grünkörper hängt noch mit dem Wachs zusammen.

In einem folgenden Temperaturbehandlungsschritt S4 wird der Grünkörper einer Wärmebehandlung unterzogen nachdem zuvor durch z.B. eine Anwendung von Vakuum und/oder Vibration das Lösungsmittel abgezogen worden ist.

Im Laufe des Temperaturbehandlungsschritts S4 wird zunächst das Wachs flüssig und fließt von dem Grünkörper ab.

Ab ca. 250 °C bis ca. 500 °C pyrolisiert der Binder unter Abgabe volatiler Bestandteile zu einem amorphen Quarz, welches das sinterfähige Keramikpulver umhüllt und somit fixiert.

In einem letzten Temperaturteilschritt werden die Keramikpulverpartikel durch Hochtemperatursinterung gesintert, z.B. zwischen 850 °C und 1300 °C, insbesondere bis ca. 1200 °C, so dass ein gesinterter Keramikkörper entsteht.

Der gesinterte Keramikkörper mag beispielsweise als ein Gießkern oder als eine Gussform für einen späteren Metallfeinabguss dienen.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

Allgemein mag bei dem Verfahren ein Mischen oder Zusammenführen auch ein Bereitstellen einer zuvor gemischten oder zusammengeführten Formulierung oder Zusammensetzung umfassen, und umgekehrt. Beispielsweise mag das Merkmal, dass "dem Binder mindestens ein epoxidischer Reaktivverdünner beigemischt wird" ein Mischen dieser Bestandteile durch einen Anwender des Verfahrens als auch ein Nutzen einer entsprechend vorformulierten Zusammensetzung durch den Nutzer umfassen.

## Patentansprüche

1. Verfahren (S1, S1a, S1b, S1c) zum Herstellen eines Schlickers, wobei mindestens ein anorganischer Bestandteil mit mindestens einem Binder vermischt wird und der Binder mindestens ein Epoxidharz und mindestens ein Silikoncopolymerisat aufweist.

2. Verfahren (S1, S1a, S1b, S1c) nach Anspruch 1, wobei als Silikoncopolymerisat mindestens ein glycidylfunktionales Poly(Phenyl-Methyl)-Silikon verwendet wird (S1c).

3. Verfahren (S1, S1a, S1b, S1c) nach einem der vorhergehenden Ansprüche, wobei als Silikoncopolymerisat mindestens ein aminofunktionales Poly(Phenyl-Methyl)-Silikon verwendet wird (S1c).

4. Verfahren (S1, S1a, S1b, S1c) nach einem der vorhergehenden Ansprüche, wobei das mindestens eine Silikoncopolymerisat mit Bisphenol-A-Diglycidylether und/oder Bisphenol-F-Diglycidylether abgemischt wird, insbesondere in einer 10%-igen bis 50%-igen (w/w) Abmischung.

5. Verfahren (S1, S1a, S1b, S1c) nach einem der vorhergehenden Ansprüche, wobei der Binder mindestens ein Amin als zusätzliches Härtungsmittel aufweist.

6. Verfahren (S1, S1a, S1b, S1c) nach Anspruch 5, wobei als das zusätzliche Härtungsmittel mindestens ein in beta-Stellung organosubstituiertes Amin verwendet wird.

7. Verfahren (S1, S1a, S1b, S1c) nach einem der Ansprüche 5 bis 6, wobei das zusätzliche Härtungsmittel Polyetheramin aufweist.

8. Verfahren (S1, S1a, S1b, S1c) nach einem der vorhergehenden Ansprüche, wobei das mindestens eine Epoxidharz BADGE, BFDGE und/oder eine Abmischung davon aufweist (S1b).

9. Verfahren (S1, S1a, S1b, S1c) nach einem der vorhergehenden Ansprüche, wobei dem Binder mindestens ein epoxidischer Reaktivverdünner beigemischt wird oder ist (S1b).

10. Verfahren nach einem der vorhergehenden Ansprüche, wobei dem Binder Propylencarbonat, Butylencarbonat, Glycerincarbonat oder mindestens eine beliebige Mischung daraus beigemischt wird oder ist.

11. Verfahren (S1, S1a, S1b, S1c) nach einem der vorhergehenden Ansprüche, wobei dem Schlicker Methylethylketon, Aceton und/oder Isopropanol als Lösungsmittel beigemischt wird oder ist (S1).

12. Verfahren (S1, S1a, S1b, S1c) nach einem der vorhergehenden Ansprüche, wobei der mindestens eine anorganische Bestandteil unterschiedliche Fraktionen, insbesondere Keramikpulverfraktionen, mit zueinander bimodalen oder multimodalen Partikelgrößenverteilungen aufweist (S1a).

13. Verfahren (S1, S1a, S1b, S1c) nach einem der vorhergehenden Ansprüche, wobei der Schlicker kollodialdisperse, amorphe Siliziumdioxid-Nanopartikel aufweist, insbesondere wenn eine Oberfläche der Siliziumdioxid-Nanopartikel mit einem epoxidverträglichen Haftvermittler kovalent beschichtet ist (S1c).

14. Bauteil, das mittels eines Schlickers hergestellt worden ist, welcher Schlicker mittels des Verfahrens (S1, S1a, S1b, S1c) nach einem der vorhergehenden Ansprüche hergestellt worden ist.

## Claims

1. Method (S1, S1a, S1b, S1c) for producing a slip, wherein at least one inorganic constituent is mixed with at least one binder and the binder comprises at least one epoxy resin and at least one silicone copolymer.

2. Method (S1, S1a, S1b, S1c) according to Claim 1, wherein said silicone copolymer used comprises (S1c) at least one glycidyl-functional poly(phenyl-methyl)silicone.

3. Method (S1, S1a, S1b, S1c) according to either of the preceding claims, wherein said silicone copolymer used comprises (S1c) at least one amino-functional poly(phenylmethyl)silicone.

4. Method (S1, S1a, S1b, S1c) according to any of the preceding claims, wherein said at least one silicone copolymer is blended with bisphenol A diglycidyl ether and/or bispenol F diglycidyl ether, more particularly in a 10% to 50% (w/w) blend.

5. Method (S1, S1a, S1b, S1c) according to any of the preceding claims, wherein the binder comprises at least one amine as additional hardener.

6. Method (S1, S1a, S1b, S1c) according to Claim 5, wherein said additional hardener used comprises at least one amine organo-substituted in beta position.

7. Method (S1, S1a, S1b, S1c) according to either of Claims 5 and 6, wherein the additional hardener comprises polyetheramine.

8. Method (S1, S1a, S1b, S1c) according to any of the preceding claims, wherein the at least one epoxy resin comprises (S1b) BADGE, BFDGE and/or a blend thereof.

9. Method (S1, S1a, S1b, S1c) according to any of the preceding claims, wherein the binder has been or is admixed (S1b) with at least one epoxidic reactive diluent.

10. Method according to any of the preceding claims, wherein the binder has been or is admixed with propylene carbonate, butylene carbonate, glycerol carbonate or at least one arbitrary mixture thereof.

11. Method (S1, S1a, S1b, S1c) according to any of the preceding claims, wherein the slip has been or is admixed (S1) with methyl ethyl ketone, acetone and/or isopropanol as solvent.

12. Method (S1, S1a, S1b, S1c) according to any of the preceding claims, wherein the at least one inorganic constituent comprises (S1a) different fractions, more particularly ceramic powder fractions, having particle size distributions bimodal or multimodal to one another.

13. Method (S1, S1a, S1b, S1c) according to any of the preceding claims, wherein the slip comprises colloidally disperse, amorphous silicon dioxide nanoparticles, more particularly when a surface of the silicon dioxide nanoparticles has been covalently coated (S1c) with an epoxide-compatible adhesion promoter.

14. Component produced by means of a slip, said slip having been produced by means of the method (S1, S1a, S1b, S1c) according to any of the preceding claims.

## Revendications

1. Procédé (S1, S1a, S1b, S1c) pour la préparation d'une barbotine, dans lequel on mélange au moins un constituant inorganique avec au moins un liant et le liant présente au moins une résine époxyde et au moins un copolymère à base de silicone.

2. Procédé (S1, S1a, S1b, S1c) selon la revendication 1, dans lequel, à titre de copolymère à base de silicone, on utilise au moins un poly(phényl-méthyl)-silicone à fonctionnalité glycidyle (S1c).

3. Procédé (S1, S1a, S1b, S1c) selon l'une quelconque des revendications précédentes, dans lequel, à titre de copolymère à base de silicone, on utilise au moins un poly(phényl-méthyl)-silicone à fonctionnalité amino (S1c).

4. Procédé (S1, S1a, S1b, S1c) selon l'une quelconque des revendications précédentes, dans lequel on mélange ledit au moins un copolymère à base de silicone avec de l'éther glycidylique de bisphénol A et/ou de l'éther diglycidique de bisphénol F, en particulier dans un mélange de 10 % à 50 % (en poids/poids).

5. Procédé (S1, S1a, S1b, S1c) selon l'une quelconque des revendications précédentes, dans lequel le liant présente au moins une amine à titre d'agent de durcissement supplémentaire.

6. Procédé (S1, S1a, S1b, S1c) selon la revendication 5, dans lequel à titre d'agent de durcissement supplémentaire, on utilise au moins une amine substituée par un groupe organique en position bêta.

7. Procédé (S1, S1a, S1b, S1c) selon l'une quelconque des revendications 5 à 6, dans lequel l'agent de durcissement supplémentaire présente une polyétheramine.

8. Procédé (S1, S1a, S1b, S1c) selon l'une quelconque des revendications précédentes, dans lequel ladite au moins une résine époxyde présente du BADGE, du BFDGE et/ou un mélange des deux (S1b).

9. Procédé (S1, S1a, S1b, S1c) selon l'une quelconque des revendications précédentes, dans lequel on ajoute ou on a ajouté par mélange au liant au moins un diluant réactif époxydé (S1b).

10. Procédé selon l'une quelconque des revendications précédentes, dans lequel on ajoute ou on a ajouté au liant du carbonate de propylène, du carbonate de butylène, le carbonate de glycérol ou au moins un mélange quelconque desdits carbonates.

11. Procédé (S1, S1a, S1b, S1c) selon l'une quelconque des revendications précédentes, dans lequel on ajoute ou on a ajouté par mélange à la barbotine de la méthyléthylcétone, de l'acétone et/ou de l'isopropanol à titre de solvant (S1).

12. Procédé (S1, S1a, S1b, S1c) selon l'une quelconque des revendications précédentes, dans lequel ledit au moins un constituant inorganique présente des fractions différentes, en particulier des fractions de poudre de céramique, avec des distributions granulométriques bimodales ou multimodales les unes par rapport aux autres (S1a).

13. Procédé (S1, S1a, S1b, S1c) selon l'une quelconque des revendications précédentes, dans lequel la barbotine présente des nanoparticules amorphes de dioxyde de silicium, sous la forme d'une dispersion colloïdale, en particulier lorsqu'une surface des nanoparticules de dioxyde de silicium a été soumise à une enduction covalente à l'aide d'un promoteur de l'adhérence manifestant une compatibilité époxy (S1c).

14. Composant, qui a été préparé au moyen d'une barbotine, ladite barbotine ayant été préparée au moyen du procédé (S1, S1a, S1b, S1c) selon l'une quelconque des revendications précédentes.
